# EUROPEAN PATENT APPLICATION

(11) **EP 0 995 538 A1**
(43) Date of publication of application: **26.04.2000**
(21) Application number: 99119713.8
(22) Date of filing: 05.10.1999
(51) Int. Cl.: B23P 19/02, B29C 65/56, B29C 65/44

(54) **Press-fitting method wherein at least one of two members to be press-fitted is heated before press-fitting contact**

(30) Priority: 20.10.1998 JP 29836798
(71) Applicant: TOYOTA JIDOSHA KABUSHIKI KAISHA, Aichi-ken 471-8571 (JP)
(72) Inventor: Shioya, Shigemi c/oTOYOTA JIDOSHA KABUSHIKI KAISHA, Aichi-ken 471-8571 (JP)
(74) Representative: Winter, Brandl & Partner

(57) **Abstract**

Method of press-fitting a first member (10) into a second member (14) by an inertial motion of at least one of the first and second members, which inertial motion is given by a kinetic energy applied to at least one of the two members such that the two members are moved toward each other, wherein at least one of the two members (10, 14) is heated before the first member is press-fitted into the second member.

## Description

This application is based on Japanese Patent Application No. 10-298367 filed October 20, 1998, the content of which is incorporated hereinto by reference.

### BACKGROUND OF THE INVENTION

### Field of the Invention

The present invention relates to a method of press-fitting a first member into a second member by an inertial motion of at least one of the first and second members, which inertial motion is given by a kinetic energy applied to the at least one of the two members such that the two members are moved toward each other.

### Discussion of the Prior Art

An example of the press-fitting method utilizing an inertial motion is disclosed in JP-A-9-66424. When a first member and second member are fitted together by an interference fit utilizing an inertial motion of at least one of the two member, these members may be damaged due to a press-fitting impact where one of the two members is formed of a relatively brittle material. In particular, the two members are relatively likely to crack or suffer from similar structural damages due to a relatively large impact upon abutting contact of press-fitting portions of the two members, where the axial press-fitting distance is determined by abutting contact of the press-fitting portions. Such damages of the members to be press-fitted can be avoided by reducing the amount of the interference fit to thereby reduce the required inertial energy to be applied to at least one of the two members. In this case, however, the strength of bonding between the two members is undesirably reduced.

### SUMMARY OF THE INVENTION

It is therefore an object of the present invention to provide an inertial press-fitting method which permits press-fitting of two members while avoiding damages thereof and assuring a sufficient strength of bonding therebetween.

The above object may be achieved according to any one of the following modes of the present invention, each of which is numbered like the appended claims, and depends from the other mode or modes, where appropriate, so as to indicate possible combinations of elements or features of the present invention. It is to be understood that the present invention is not limited to the following modes or combinations of the following modes:
(1) A method of press-fitting a first member into a second member by an inertial motion of at least one of the first and second members, which inertial motion is given by a kinetic energy applied to the above-indicated at least one of the first and second members such that the first and second members are moved toward each other, the method comprising a step of heating at least one heated member which consists of at least one of the first and second members, before the first member is press-fitted into the second member.
   Where at least one of the first and second members is formed of a relatively brittle material, the impact resistance of the brittle material is improved, and the members are less likely to be damaged due to the press-fitting impact. The impact resistance can be effectively improved by heating the brittle material to a temperature which is lower than but close to the softening point of the material.
   It is also noted that the modulus of elasticity of a material decreases with an increase of its temperature. In this respect, too, press-fitting of the first and second members can be facilitated by heating at least one of these two members to thereby reduce the required kinetic energy to be applied to one of the two members. As a result, the heating results in reducing the required amount of energy consumption and the required capacity of the press-fitting apparatus, leading to reduced cost for the press-fitting operation. Although the present invention was developed to avoid damaging of the two members formed of a brittle material due to the press-fitting impact, the principle of this invention wherein the heating reduces the required kinetic energy is equally applicable to the press-fitting of the first and second members which are formed of non-brittle materials.
(2) A method according to the above mode (1), wherein the step of heating comprises heating the above-indicated at least one heated member to a temperature within a range between a softening temperature of a material of the above-indicated at least one heated member and an ambient or room temperature.
(3) A method according to the above mode (1) or (2), wherein the above-indicated at least one heated member comprises the second member.
   The second member includes a female fitting portion having a hole into which the first member is press-fitted. Heating the second member results in enlarging the hole due to thermal expansion, and facilitates the press-fitting of the first member into the hole. This advantage can be effectively enjoyed particularly where the second member is heated while the first member is not heated. Where the first member is heated, the press-fitting is facilitated to a greater extent where the second member is also heated, than where the second member is not heated.
(4) A method according to any one of the above modes (1)-(3), wherein each of the above-indicated at least one heated member is formed of a non-metallic material.
   Most of non-metallic materials are relatively brittle. In this sense, the present invention is effective where the heated member is formed of a non-metallic material. According to this mode (4), either one or both of the first and second members may be formed of a non-metallic material.
(5) The method according to the above mode (4), wherein the non-metallic material is a synthetic resin.
(6) A method according to the above mode (5), wherein the synthetic resin is an engineering plastic.
(7) A method according to the above mode, wherein the engineering plastic is selected from a group consisting of a polycarbonate resin, an acrylic resin and an an ABS resin.
   A polycarbonate resin is a typical example of the engineering plastic material. The impact resistance of the polycarbonate resin is increased two times, with a result of a considerably increase in its resistance to cracking, by heating this resin from -30°C to 50°C, for instance. In this respect, an acrylic resin and an ABS resin are similar in nature to the polycarbonate resin.
(8) A method according to the above mode (4), wherein the non-metallic material is a rubber material.
   Where a rubber bushing is press-fitted into a cylindrical metallic member at a low ambient temperature of about -10°C, for example (in a factory in a cold district), the rubber bushing may crack due to high brittleness at a low temperature. The present invention is effective to avoid cracking of such a rubber member.
(9) A method according to the above mode (4), wherein the non-metallic material is a soda glass.
   The present invention is also suitably applicable to the inertial press-fitting of the first and second members at least one of which is formed of a soda glass that is a particularly brittle material.
(10) A method according to any one of the above modes (1)-(3), wherein each of the above-indicated at least one heated member is formed of a metallic material.
   Some metallic materials are brittle, and the heating according to the present invention is effective to improve the impact resistance of such brittle metallic material. For most of the metallic materials, however, the heating according to the present invention is intended to reduce the modulus of elasticity of those metallic materials to thereby facilitate the press-fitting of the two members. The present invention is effectively particularly where at least one of the two members is formed of an aluminum alloy, a magnesium alloy or an alloy of a similar metal.
(11) A method according to any one of the above modes (1)-(10), wherein the step of heating comprises activating an electric heater to generate heat for heating the above-indicated at least one heated member.
   The use of an electric heater makes it possible to heat a non-metallic material as well as a metallic material.
(12) A method according to any one of the above modes (1)-(3) and (10), wherein the step of heating comprises heating the above-indicated at least one heated member by induction heating.
   Where the heated member is formed of a metallic material, it can be efficiently heated by high-frequency or low-frequency induction heating, so that the press-fitting cycle time can be accordingly reduced, leading to improved efficiency of the press-fitting operation.
(13) A method according to any one of the above modes (1)-(12), wherein the step of heating is effected before the above-indicated at least one heated member is set in a press-fitting apparatus by which the first member is press-fitted into the second member, the step of heating being effected by a heating device not incorporated in the apparatus.
   The heated member which has been heated by the exclusive heating device not incorporated in the press-fitting apparatus may or may not be heated after the first and second members are set in the press-fitting apparatus. Where the heated member is heated before it is set in the press-fitting apparatus, the heating within the apparatus may be eliminated, or the required time for the heating within the apparatus may be reduced, so that the press-fitting cycle time can be reduced to improve the press-fitting efficiency.

### BRIEF DESCRIPTION OF THE DRAWINGS

The above and optional objects, features and advantages of this invention, and technical and industrial significance of the invention will be better understood by reading the following detailed description of a presently preferred embodiment of the invention, when considered in connection with the accompanying drawings, in which:
Fig. 1 is a front elevational view partly in cross section of an inertial press-fitting apparatus suitable for practicing the method according to one embodiment of this invention;
Fig. 2 is a fragmentary enlarged front elevational view in cross section of the inertial press-fitting apparatus of Fig. 1; and
Fig. 3 is a block diagram schematically illustrating a portion of a control system for the inertial press-fitting apparatus, which portion relates to the principle of this invention.

### DETAILED DESCRIPTION OF THE PREFERRED EMBODIMENT

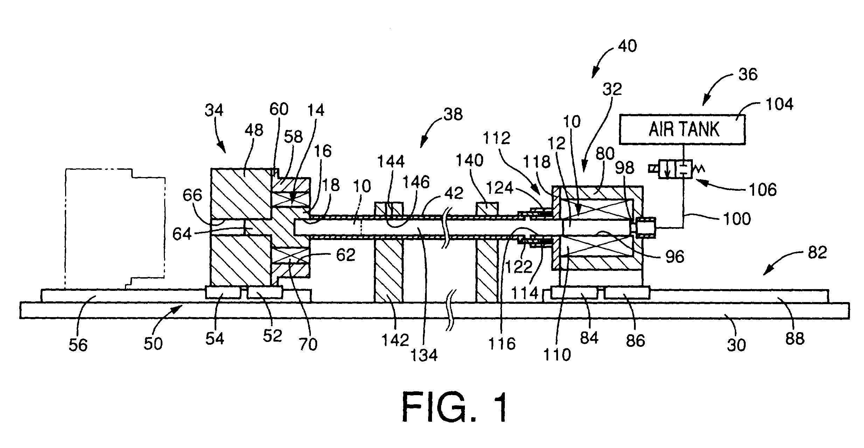

Referring to the accompanying drawings, there will be described one embodiment of a press-fitting method of the present invention wherein an interference fit of first and second members is effected by moving one of these two members while the other member is held stationary. More specifically described, a first member 10 is press-fitted at a male fitting portion into a female fitting portion of a second member 14, by accelerating the first member 10, using an inertial press-fitting apparatus as shown in Fig. 1.

The first member 10 is an axially extending solid member in the form of a rod having a circular cross sectional shape, which includes a solid end portion 12 serving as the above-indicated male fitting portion. On the other hand, the second member 14 is a stepped cylindrical member including a recessed end portion 16 which has a hole 18 formed in a central part of its end face and which serves as the above-indicated female fitting portion, into which the male fitting portion 12 of the first member 10 is press-fitted according to the principle of this invention. Since the end portion 12 is press-fitted into the hole 18 with a certain amount of interference therebetween, the diameter of the end portion 12 is determined to be slightly larger than the diameter of the hole 18 before the end portion 12 is press-fitted into the hole 18. A difference between the diameters of the end portion 12 and the hole 18 is the amount of the interference therebetween. It is ideal that the press-fitting of the first and second members 10, 14 is terminated with an abutting contact of the end face of the end portion 12 with the bottom surface of the hole 18 of the recessed end portion 16. In this ideal press-fitting operation, the bottom surface of the hole 18 serves as a stop for determining or defining an axial distance of the press fitting or interference fit. In the present embodiment, the first and second members 10, 14 are both formed of a polycarbonate resin material.

The inertial press-fitting apparatus shown in Fig. 1 includes a base 30, a first work holding device 32, a second work holding device 34, a motion control device 40 and a guide tube 42. The first work holding device 32 is provided for holding the first member 10 such that the first member 10 is movable in a horizontal direction for press-fitting into the second member 14. The second work holding device 34 is provided for holding the second member 14 in a stationary state while the first member 10 is press-fitted into the second member 14. The motion control device 40 consists of a kinetic energy applying device 36 and an inertial motion realizing mechanism 38. The kinetic energy applying device 36 is adapted to apply a kinetic energy to the first member 10 which is initially held by the first work holding device 32. The kinetic energy applying device 36 may be considered to be an accelerating device for accelerating the first member 10. The inertial motion realizing mechanism 38 will be described below. The first and second work holding devices 32, 34 and the kinetic energy applying device 36 are provided on the base 30. The guide tube 42 is provided as a guide member extending between the first and second work holding devices 32, 34, for guiding the first member 10, as described below in detail.

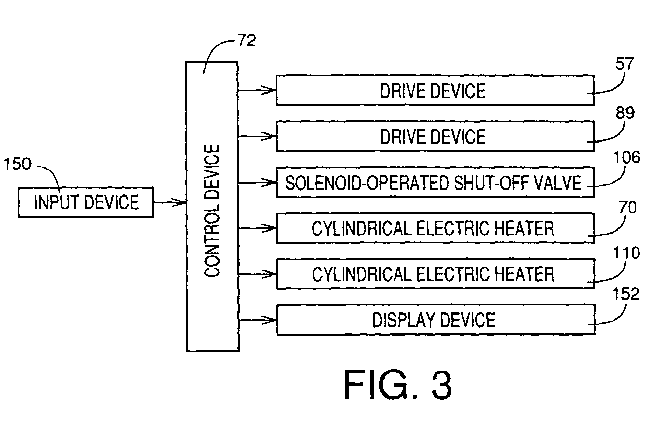

The second work holding device 34 includes a main body 48 movable in the horizontal direction, and a moving device 50 for moving the main body 48 in the horizontal direction. The moving device 50 includes rails 56 fixedly provided on the base 30, and two slides 52, 54 slidably engaging the rails 56. The main body 48 is fixedly mounted on the slides 52, 54. The moving device 50 further includes a drive device 57 indicated in Fig. 3, which is adapted to move the main body 48 in the direction of extension of the rails 56, between a retracted position and an operating position that are respectively indicated by two-dot chain line and solid line in Fig. 1. The drive device 57 may include a hydraulic cylinder, for example. The retracted and operating position of the main body 48 are determined by respective stops provided on the base 30.

The second work holding device 34 carries a holder member 58 on one of its opposite sides which faces the first work holding device 32. The holder member 58 has a radially outwardly extending flange portion 60, at which the holder member 50 is fixed to the main body 48. The holder member 58 has a through-hole 62 which is able to accommodate therein the second member 14 such that the recessed end portion 16 of the second member 14 is positioned within the through-hole 62 of the holder member 58 while a small-diameter portion 64 which is the other end portion of of the second member 14 is positioned within an engaging hole 66 formed through the main body 48.

Within the through-hole 62 of the holder member 34, there is fixedly accommodated a Cylindrical electric heater 70 so that the recessed end portion 16 of the second member 14 is accommodated within a center bore of the cylindrical electric heater 70. The electric heater 70 is covered at its outer circumferential surface and its end faces with a Suitable adiabatic material. The inside diameter of the cylindrical electric heater 70 is slightly larger than the diameter of the recessed end portion 16 of the second member 14, so that there is left a small amount of clearance between the inner circumferential surface of the electric heater 70 and the outer circumferential surface of the recessed end portion 16. The electric heater 70 is electrically connected through lead wires to a control device 72, as indicated in Fig. 3.

Like the second work holding device 34, the first work holding device 32 includes a main body 80, and a moving device 82 for moving the main body 80 in the horizontal direction. The moving device 72 includes rails 88 fixedly provided on the base 30, and two slides 84, 86 slidably engaging the rails 88. The main body 80 is fixedly mounted on the slides 84, 86. The moving device 72 further includes a drive device 89 indicated in Fig. 3, which is adapted to move the main body 80 in the direction of extension of the rails 88, between a retracted Position and an operating position. The drive device 89 may include a hydraulic cylinder, for example. The retracted and operating position of the main body 80 are determined by respective stops provided on the base 30.

The main body 80 of the first work holding device 32 has a holder hole 96 which is coaxial with the through-hole 62 of the holder member 58 of the second work holding device 34. The axes of the through-holes 62 and the holder hole 96 are parallel to the direction of movement of the main body 80. The first member 10 is initially received in the holder hole 96 in the first work holding device 32 in a substantially air-tight manner such that the first member 10 is slidably movable toward the second member 14 held by the second work holding device 34. The main body 80 is provided with a stopper portion 98 at the rear end of the holder hole 96. The stopper portion 98 is an annular portion which extends radially inwardly from the inner circumferential surface of the holder hole 96. The stopper portion 98 is provided to establish a predetermined initial axial position of the first member 10 within the holder hole 96.

The holder hole 96 in the main body 80 of the first work holding device 32 is connected through an air conduit 100 to an air tank 104 storing air under pressure. A control valve in the form of a solenoid-operated shut-off valve 106 is connected to the air conduit 100. This shut-off valve 106 is placed in a closed position and an open position when its solenoid coil is in OFF and ON states, respectively. In the closed position, a flow of the pressurized air from the air tank 104 into the holder hole 96 is inhibited. In the open position, the flow of the pressurized air from the air tank 104 into the holder hole 96 is permitted.

The holder hole 96 is defined by a cylindrical electric heater 110 accommodated within the main body 80. Like the electric heater 70, the electric heater 110 is covered at its outer circumferential surface and its end faces with a suitable adiabatic material. The cylindrical electric heater 110 has a metallic inner sleeve whose inner circumferential surface defines the diameter of the holder hole 96. The electric heater 110 is electrically connected through lead wires to the control device 72, as indicated in Fig. 3.

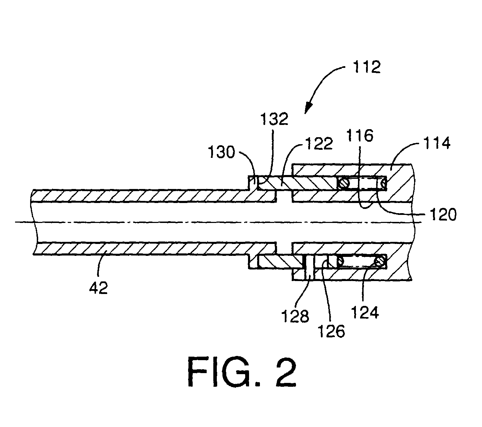

A connector device 112 is fixed to the front surface of the main body 80 which faces the second work holding device 34. The connector device 112 includes a body portion 114 having a central through-hole 116, and a flange portion 118 at which the connector device 112 is fixed to the front surface of the main body 80 such that the central through-hole 116 is coaxial and in communication with the holder hole 96. As shown in Fig. 2, the body portion 114 has an annular groove 120 which is formed radially outwardly and coaxially with the through-hole 116. The connector device 112 further includes a cylindrical connector member 122 which engages the annular groove 120 slidably in the axial direction. An elastic member in the form of a compression coil spring 124 is disposed between the bottom surface of the annular groove 120 and the end face of the connector member 122 which is opposed to the bottom surface, so that the connector member 122 is biased in an axial direction thereof from the first work holding device 32 toward the second work holding device 34. The connector member 122 has two elongate holes 126 extending in the axial direction. These two elongate holes 126 (only one of which is shown in Fig. 2) are located at two diametrically opposite circumferential positions of the connector member 122. The body portion 114 has two engaging pins 128 fixed thereto, which engage the respective elongate holes 126. The connector member 122 is axially movable between a fully advanced position and a fully retracted position which are determined by abutting contact of the pins 128 with the opposite axial ends of the elongate holes 126.

The guide tube 42 indicated above has a radially outwardly extending flange portion 130 at its end portion on the side of the first work holding device 32, as shown in Fig. 2. The flange portion 130 has an annular abutting surface 132 which faces the connector device 112 and which is coaxial with the connector member 122. When the first work holding device 32 is moved from the retracted position toward the operated position with the connector member 122 held in its fully advanced position, the front end portion of the connector member 122 is brought into engagement with the end portion of the guide tube 42, and into abutting contact with the abutting surface 132 of the guide tube 42. With a further movement of the first work holding device 32 toward the operated position, namely, toward the second work holding device 34, the connector member 122 is moved toward its fully retracted position relative to the body portion 114 against a biasing force of the compression coil spring 124. When the first work holding device 32 has reached the predetermined operated position, the connector member 122 in abutting contact with the abutting surface 132 is located at a position between its fully advanced and retracted position. Namely, the connector member 122 is not located at the fully retracted position at which the pins 128 engage the rear ends of the elongate holes 126. In this condition, the connector member 122 is held in pressing contact with the abutting surface 132 under the biasing force of the coil spring 124. Thus, the first work holding device 32 is substantially air-tightly connected to the guide tube 42 when the first work holding device 32 has been advanced to the operated position. It will be understood that the holder hole 96, the through-hole 116 and the guide tube 42 cooperate to form a guide passage 134 for guiding the first member 10.

The guide tube 42 is fixedly supported by a first rest 140 located relatively near the first work holding device 32, and a second rest 142 located relatively near the second work holding device 34, such that the guide tube 42 is coaxial with the first and second members 10, 14 held by the respective firs and second work holding devices 32, 34. The first and second rests 140, 142 are both fixed to the base 30. The second rest 144 has an aperture 144 open in its upper surface, while the guide tube 42 has a communication hole 146 which communicates with the guide passage 134 and the aperture 144. The aperture 144 and the communication hole 146 cooperate to define an air vent for discharging the air from a portion of the guide passage 134 in front of the first member 10, into the atmosphere as the first member 10 is advanced from the holder hole 96 to a position corresponding to the second rest 144. When the rear end of the first member 10 has passed the communication hole 146, a portion of the guide passage 134 located behind4 the first member 10 is brought into communication with the atmosphere, so that the pressure in the portion of the guide passage 134 located behind the first member 10 is lowered to a level almost equal to the atmospheric pressure, whereby the first member 10 which has been accelerated by the pressurized air supplied from the air tank 104 is brought into a substantially inertial motion after the rear end of the first member 10 has passed the communication hole 146 and before the first member 10 has been brought into press-fitting contact with the second member 14.

It will be understood from the above explanation that the air conduit 100, air tank 104 and solenoid-operated shut-off valve 106 constitute a major portion of the above-indicated kinetic energy applying device 36 for applying a kinetic energy to the first member 10, and that the aperture 144 and the communication hole 146 defining the air vent function as the above-indicated inertial motion realizing mechanism 38. It will also be understood that the kinetic energy applying device 36 and the inertial motion realizing mechanism 38 cooperate to constitute the motion control device 40 for controlling the motion of the first member 10.

The control device 72 indicated above is constituted principally by a computer incorporating a processing unit (PU), a read-only memory (ROM) and a random-access memory (RAM). To an input interface of the control device 72, there is connected an input device 150 such as a keyboard operable by an operator of the present inertial press-fitting apparatus, as shown in Fig. 3. To an output interface of the control device 72, there are connected the drive devices 57, 89, the solenoid-operated shut-off valve 106, the electric heaters 70, 110, and an output device in the form of a display device 152, as also shown in Fig. 3. To the input interface of the control device 72, there is also connected a pressure sensor (not shown) for detecting the pressure of the pressurized air in the air tank 104. The output interface of the control device 72 is also connected to a device for controlling the pressure in the air tank 104 on the basis of the pressure detected by the pressure sensor. By operating the input device 150, the operator can set and control the temperature level of the first and second members 10, 14 heated by the respective electric heaters 70, 110, and the amount of the kinetic energy to be applied to the first member 10. The temperature levels can be controlled by turning ON and OFF the electric heaters 70, 110 and by regulating the amounts of the electric current to be applied to the electric heaters 70, 110. The amount of the kinetic energy to be applied to the first member 10 can be controlled by regulating the air pressure within the air tank 104. In the present embodiment, the temperatures to which the first and second members 10, 14 are heated are set to be slightly lower than the softening point of the polycarbonate resin material of the first and second members 10, 14. The control device 72 is adapted to automatically turn ON and OFF the electric heaters 70, 110 and regulate the electric current to be applied to these heaters.

There will next be described a method of press-fitting the first member 10 into the second member 14, using the inertial press-fitting apparatus which has been described.

Before the press-fitting operation on the two members 10, 14 is initiated, the first and second work holding devices 32, 34 are located at their predetermined retracted position, and the second member 14 is set in place within the through-hole 62 and the engaging hole 66 while the first member 10 is set in place within the holder hole 96. Before the setting of the first and second members 10, 14 in the respective work holding devices 32, 34 is completed, the electric heaters 110, 70 have been turned ON to heat the first and second members 10, 14 to a temperature close to the softening point, shortly after the setting is completed. However, the electric heaters 70, 110 may be turned ON after the setting is completed. Then, the work holding devices 32, 34 are moved toward each other and brought to the predetermined operated positions. In the meantime, the first and second members 10, 14 are heated such that the heat generated by the electric heaters 70, 110 is transferred primarily by radiation to the first and second members 10, 14. Thus, the preparation for the inertial press-fitting operation is completed.

Upon completion of the preparation for the inertial press-fitting operation, the solenoid-operated shut-off valve 106 is opened to supply the pressurized air from the air tank 104 into the air passage 134 through the air conduit 100 so that the pressurized air acts on the rear end face of the first member 10. Since the pressure of the pressurized air is considerably higher than the atmospheric pressure in the portion of the air passage 134 in front of the first member 10, a kinetic energy is applied to the the first member 10, so that the first member 10 is moved in the axial direction with acceleration toward the second member 14, through the air passage 134, while maintaining a coaxial relationship with the second member 14. The air in the portion of the air passage 134 in front of the first member 10 is exhausted into the atmosphere through the air vent 144, 146, until the front end of the first member 10 has reached the communication hole 146. After the rear end of the first member 10 has passed the communication hole 146, the portion of the air passage 134 located behind the first member 10 is again communicated with the atmosphere, so that the pressure in that portion of the air passage 134 is lowered to the atmospheric level, whereby the first member 10 is brought into an inertial motion phase before the first member 10 contacts the second member 14. The first member 10 in the process of the inertial motion comes into abutting contact with the recessed end portion 16 of the second member 14. Thus, the press-fitting of the front end portion 12 of the first member 10 into the fitting hole 18 of the second member 14 is initiated.

Before the initiation of the press-fitting contact of the first member 10 with the second member 14, the modulus of elasticity of the two members 10, 14 have been reduced due to the heating by the electric heaters 70, 110, whereby the press-fitting operation is facilitated. Although the two members 10, 14 are formed of relatively brittle materials (polycarbonate resin materials), the impact resistance of the materials is improved owing to the heating of the materials to a temperature slightly lower than the softening point. Accordingly, the first and second members 10, 14 are effectively protected from cracking or other damages which would otherwise take place upon press-fitting impact of the first member 10 against the second member 14. Further, a local fusion of the two members 10, 14 at their contacting surfaces due to a friction heat contributes to an increase in the strength of bonding between the two members 10, 14.

After the solid end portion 12 of the first member 10 has been press-fitted into the recessed end portion 16 of the second member 14 with a certain amount of interference therebetween, the second work holding device 34 holding an assembly of the two members 10, 14 which has been obtained by the press-fitting operation is moved to its retracted position, and the assembly is removed from the work holding device 34. Then, another piece of the second member 14 is set in place in the second work holding device 34, while another piece of the first member 10 is set in place in the first work holding device 32 which has also been returned to its retracted position. These pieces are heated by the electric heaters 70, 110, before the next press-fitting cycle is initiated on these pieces.

In the present embodiment, the first and second members 10, 14 are both heated. Namely, both of these two workpiece members 10, 14 are selected as the heated members. However, only one of the two workpiece members may be heated. In this case, only the second member 14 having the recessed end portion 16 having the fitting hole 18 is desirably heated, namely, selected as the heated member, so that the fitting hole 18 is enlarged due to the heating, to facilitate the press fitting engagement of the solid end portion 12 of the first member 10 into the enlarged fitting hole 18.

While the two workpiece members 10, 14 are formed of polycarbonate resin materials, which are relatively brittle, the workpiece members 10, 14 may be formed of other synthetic resin materials, or non-metallic materials. Alternatively, the workpiece members 10, 14 may be formed of suitable metallic materials. Even where the materials of the members 10, 14 are not brittle, heating at least one of these workpiece members 10, 14 will cause a decrease in the modulus of elasticity of the materials, thereby facilitating the press-fitting operation. Where the heated member (member to be heated) is a metallic member, this workpiece member can be heated by induction heating. The induction heating may be effected by disposing a coil adjacent to at least one of the outer and inner circumferential surface of the heated member, and applying a high-frequency or low-frequency current to the coil, for causing the workpiece member to produce an eddy current to thereby heat the workpiece member. The induction heating permits more efficient heating of the heated member, than the heating using heaters such as the electric heaters 70, 110, and therefore permits continuous press-fitting cycles with high efficiency.

Although the illustrated embodiment is adapted to heat the workpiece members 10, 14 after they are set in the press-fitting apparatus, the two workpiece members 10, 14 may be heated before they are set in the apparatus. For instance, the workpiece member to be heated is heated within a heating furnace whose temperature of the atmosphere has has been controlled to a predetermined level. The thus heated workpiece member is set in the corresponding work holding device. In this case, the heating device need not be incorporated in the press-fitting apparatus. However, another or internal heating device is preferably incorporated in the press-fitting apparatus, so that the workpiece member which has been heated by the external heating device to a level lower than the predetermined level is heated by the internal heating device within the press-fitting apparatus, to the predetermined level. Where the workpiece member is heated to the predetermined level by the external heating device, the internal heating device is used to compensate for a temperature drop during the setting of the workpiece member in the press-fitting apparatus. The internal heating device may be used to maintain the temperature of the once heated workpiece member at the predetermined level.

While one presently preferred embodiment of the present invention has been described above in detail for illustrative purpose only, it is to be understood that the invention is not limited to the details of the illustrated embodiment, but may be otherwise embodied with various changes, modifications or improvements, which may occur to those skilled in the art.

## Claims

1. A method of press-fitting a first member (10) into a second member (14) by an inertial motion of at least one of said first and second members, which inertial motion is given by a kinetic energy applied to said at least one of said first and second members such that said first and second members are moved toward each other, **characterized by comprising:**
a step of heating at least one heated member which consists of at least one of said first and second members (10, 14), before said first member is press-fitted into said second member.

2. The method according to claim 1, wherein said step of heating comprises heating said at least one heated member to a temperature within a range between a softening temperature of a material of said at least one heated member and an ambient temperature.

3. The method according to claim 1 or 2, wherein said at least one heated member comprises said second member.

4. The method according to any one of claims 1-3, wherein each of said at least one heated member is formed of a non-metallic material.

5. The method according to claim 4, wherein said non-metallic material is a synthetic resin.

6. The method according to claim 5, wherein said synthetic resin is an engineering plastic.

7. The method according to claim 6, wherein said engineering plastic is selected from a group consisting of a polycarbonate resin, an acrylic resin and an an ABS resin.

8. The method according to claim 4, wherein said non-metallic material is a rubber material.

9. The method according to claim 4, wherein said non-metallic material is a soda glass.

10. The method according to any one of claims 1-3, wherein each of said at least one heated member is formed of a metallic material.

11. The method according to any one of claims 1-10, wherein said step of heating comprises activating an electric heater to generate heat for heating said at least one heated member.

12. The method according to any one of claims 1-3 and 10, wherein said step of heating comprises heating said at least one heated member by induction heating.

13. The method according to any one of claims 1-12, wherein said step of heating is effected before said at least one heated member is set in a press-fitting apparatus (30, 32, 34, 36, 38, 40) by which said first member (10) is press-fitted into said second member (14), said step of heating being effected by a heating device not incorporated in said apparatus.

14. The method according to any one of claims 1-13, wherein said first member (10) includes a male fitting portion in the form of a solid end portion (12), while said second member (14) includes a female fitting portion in the form of a recessed portion (16) having a fitting hole (18) into which said solid end portion is press-fitted.

15. The method according to any one of claims 1-14, wherein said first member (10) is given said inertial motion owing to a kinetic energy applied to said first member.
